# EUROPEAN PATENT SPECIFICATION

(11) **EP 1 776 857 B1**
(45) Date of publication and mention of the grant of the patent: **03.03.2010**
(21) Application number: 06021698.3
(22) Date of filing: 17.10.2006
(51) Int. Cl.: A01D 34/86, A01B 63/112, A01B 63/10

(54) **Control device for the support means of a tool**
Regelvorrichtung für einen Werkzeugträger
Dispositif de contrôle pour un élément support d'outil

(30) Priority: 24.10.2005 IT BO20050642
(43) Date of publication of application: 25.04.2007
(73) Proprietor: Ferri S.rl., 44030 Tamara (Ferrara) (IT)
(72) Inventor: Lodi, Fausto, PhD. Eng., 44100 Ferrara (IT)
(74) Representative: Negrini, Elena

(56) References cited:
- EP-A1- 0 722 654
- EP-A2- 0 682 856
- DE-A- 10 131 559
- DE-C1- 4 422 086
- DE-U1- 29 907 728
- FR-A1- 2 642 797
- FR-A1- 2 774 551
- US-A- 4 640 368
- US-B1- 6 234 508

## Description

The present invention refers to the technical field of the agricultural devices and for the maintenance of the vegetation, grass, hedge and the like, in particular it refers to a control device and to a control method for the support means of a tool, such as a cutting disc or mowing bar, a bush breaker, a shredder, a hoeing machine and the like, particularly fit for adjusting and keeping constant the pressure made by said tool on the land to be maintained.

The optimal operation of many tools for the vegetation care and for the agricultural maintenance, connected to a vehicle by means of an articulated arm, requires that they operate exerting on the land a pressure which is different from the pressure produced by their own weight.

For example, some mowing tools must contact the ground but they must be supported by the respective arm to reduce the pressure on the ground. In the contrary case, the cutting action of the tool can be excessive and, especially, the tool and the arm can be excessively stressed.

There are known articulated arms provided with control means comprising at least a sensor detecting the angle of the arm, a sensor detecting the pressure of the hydraulic cylinder of the first element of the arm and a command of said cylinder. Said control means, after their calibration according to the geometric and physical characteristics of the arm and according to the weight of the tool, are able to reduce the weight of the tool burdening to the ground. A drawback of said known control means consists in that they provide a partial control of the pressure.

Document DE-U-299 07 728 discloses a control device associated to an articulated arm connected to a vehicle and comprising actuator means for moving an agriculture tool and comprising force detecting means interposed between the articulated arm and the tool for providing the force intensity between them. It further comprises command means of the actuator means, control means connected to the force detecting means and to the command means. The control means activates the actuator means to keep constant at a desired preset value the force intensity detected by the force detecting means.

Other drawback of said known means consists in that they need to be adjusted and calibrated every time when the tool is replaced by another tool with different characteristics, which causes loss of time and risks of mistakes and hence malfunction or damages to the tool and/or the arm.

An object of the present invention is to propose a control device for the support means of a tool by means of an arm of a vehicle able to adjust the pressure exerted by the tool on the ground independently by the distance of the tool from the vehicle and the characteristics of the ground.

Other object is to provide a device able to automatically adapt itself to the tools with different characteristics.

The characteristics of the invention are underlined in the followings with particular reference to the attached drawings, in which:
- figure 1 illustrates a schematic front view of an agricultural tool connected to a vehicle by means of a support means and associated to the control device for the support means of the tool object of the present invention;
- figure 2 illustrates a schematic and partial view of the control device for the support means of the tool.

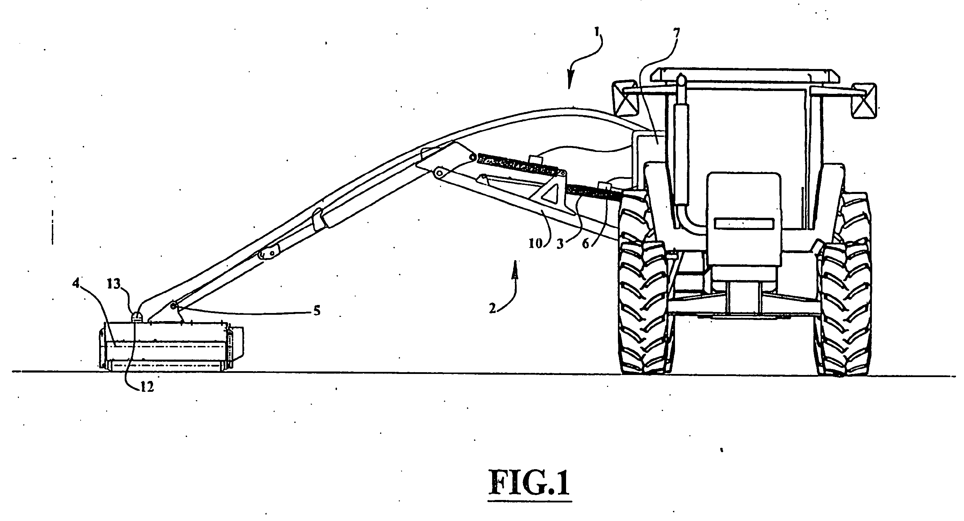

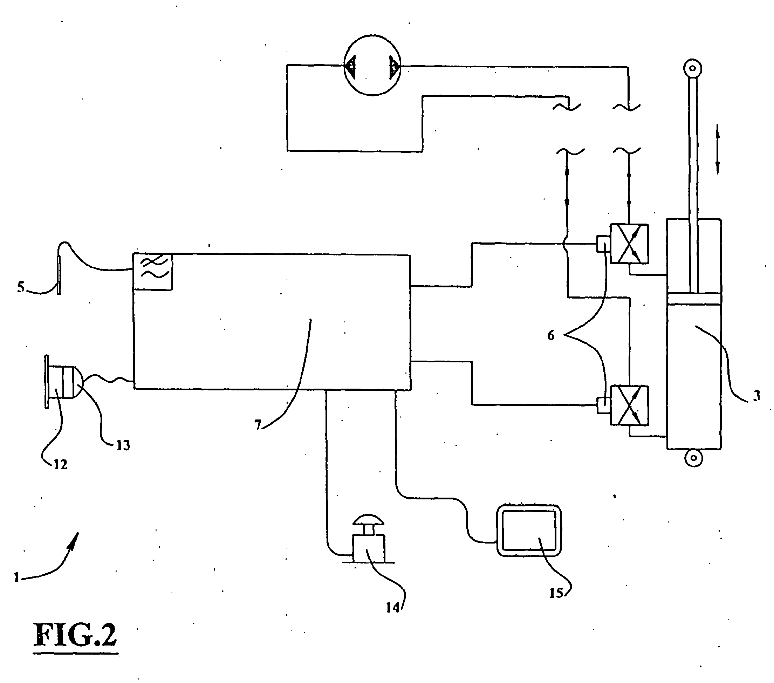

With reference to figures 1 and 2, the numeral 1 indicates the control device for the support mean 2 for an interchangeable agricultural tool 4 to maintain the vegetation, as grass, hedges or the like, and to perform various operations with the same support mean and the same vehicle.

The support mean 2 is of the kind to be connected to a vehicle, for example a tractor, a truck or a generic vehicle and it consists, for example, of a hydraulic arm with two elements, mutually connected as a compasses, and adjustable on vertical planes one in respect to the other and/or in respect to the vehicle by means of actuator means 3 of linear hydraulic type or hydraulic cylinder type.

The lower end of the first element 10 of the articulated arm is rotatably connected by means of a pivot having horizontal axis to a joint fixed with the vehicle. The upper end of the first element 10 is connected, by means of another pivot, having horizontal axis, with the upper end of the second element whose lower end supports the tool 4 by means of a further horizontal pivot. The angles formed by the first element with a vertical line and between the two elements are adjusted by means of the two hydraulic cylinders, one of which is interposed between the elements. The other cylinder of the actuator means 3 is connected between the first element 10 and the joint and it is operated by electrical command means 6 of the device 1 that control the feeding valve means thereof.

The command means 6, opening and closing the valve means of the respective cylinder of the actuator means, adjust the inclination of the first element 10 of the arm raising and lowering the tool 4.

In alternative, the invention provides that the command means are applied to the cylinder between the two elements of the arm or to any actuator able to modify the height of the tool in any kind of support means of said tool.

The device 1 comprises also force detecting means 5, for example a load cell, and digital electronic programmable control means 7.

The force detecting means 5 are interposed between the support means 2 and the tool means 4 and they supply, at an input of the control means 7 to which are connected by means of a respective electrical wiring, an electrical signal regarding the intensity of the force transmitted between the support means 2 and the tool means 4 at least in the vertical direction.

An output of the control means 7 is connected to the command means 6 for activating the actuator means 3 consisting in the hydraulic cylinder equipped with the same command means 6.

In an operating condition the control means 7, by means of the command means 6, activate the actuator means 3 in order to keep almost constant at a preset desirable value, the force intensity detected by the detecting means 5.

The connection between the support means 2 and the tool 4 is carried out by means of a plurality of pivots. If the weight of the tool mainly loads one of the pivots, it can be used only one load cell associated to said pivot. Even if the weight is shared in known manner among the pivots, it is sufficient only one load cell. In case in which the forces are distributed in variable manner among more pivots, it is provided that one load cell of force detecting means 5 can be used for each of said pivots. In this case, the force intensity transmitted from the tool to the arm will be calculated or estimated by the control means.

The interchangeable tool 4 can be chosen from a set of tools, each of which has different characteristics and weights.

In order to allow the device to automatically adjust itself depending to the features of each tool, said device is provided with a circuitry means 12 connectable to an input of the control means 7 by means of a removable connector 13, and a respective wiring, in order to supply identification data of the tool type or data of desired preset value or of deactivation of the device 1 and other eventual useful data for controlling the device.

The data can be memorized in the circuitry mean under the form of electrical resistances of opportune value or by means of other codification forms.

The circuitry mean 12 can be fixed to the tool 4 and it can be easily connected to the control means 7 by means of the removable connector 13.

The device can comprise also a manual command 14 to enable and deactivate the device 1, for example to disable the control during the movements of the arm or during the use of tools which do not need said control.

The device can also be equipped with an optional visualization means 15, for example a monitor, for controlling the operation and the status of the device 1.

Optionally, in order to reduce or to eliminate the effects of the oscillations, of the vibrations, of the small of some kind of disturbs having bigger constant of time than that of the altitude variation of the land respect to the forwarding speed of the vehicle, the inputs of the control means 7 for the force detector 5 are provided with respective low-pass filters with cut-off frequency corresponding to the minimum useful constant of time value.

Optionally the control means can comprise an input connected to speed measurement means of the vehicle for example in order to increase e the cut-off frequency of a variable filter when the speed increases or to supply an alarm when approaching or passing the optimum operation maximum speed of the device on a certain land.

The control means 7 comprises also an input connected to an operation detector of the tool (4) for deactivate the device when the tool is not in the operation condition, for example during movement phase of the arm.

The operation detector of the tool 4 is associated to this latter and is connected to the control means 7 by means of a respective connection provided in the circuitry mean 12, in the removable connector 13 and in the connection wiring of this latter.

The operation of the device 1 according to the control method for the support mean 2 of a tool 4 of the invention, provides:
- to detect, by means of one or more load cells 5, the force transmitted from the tool 4 to the support mean 2;
- to supply a signal, corresponding to the detected value, to the control means 7;
- to calculate, by means of the control means 7, the difference between the detected value and the desired preset value corresponding to the tool 4;
- to calculate, by means of a control algorithm of the control means 7, the commands entity to give to the actuator means 3 by means of command means 6 to set at zero or to reduce almost to zero, the value of the difference and to give said commands;
- to execute a new cycle by effecting a further detection.

The method furthermore provides to use preferably a proportional or proportional-derivate type control algorithm, eventually with variable gain.

An advantage of the present invention is to provide a control device and a method for the support means of a tool by means of an arm of a vehicle able to adjust the pressure on the ground of the tool independently from the distance of this latter to the vehicle and from the characteristics of the ground.

Other advantage is to provide a device able to automatically adjust itself to the tools with various characteristics.

## Claims

1. Control device associated to a support means (2) connected to a vehicle and comprising actuator means for movement at least at height (3) of at least an agriculture tool (4) or the like; said device (1) comprises at least:
- force detecting means (5) interposed between the support means (2) and the tool (4) and that can provide the force intensity in at least one vertical direction, transmitted between said support means (2) and the tool (4);
- command means (6) of the actuator means (3);
- control means (7) connected at least, at input, to the force detecting means (5) and, at output, to the command means (6);
- the support means (2) and the tool (4) are mutually connected by means of a set of pivots (8);
- the support means consists of an articulated arm with two elements, the first of which (10) is swivelling connected to a joint fixed to the vehicle, said first element (10) and the joint being interconnnected by the hydraulic actuator (3) actuated by the command means (6); and in an operational condition the control means (7), by means of the command means (6), activate the actuator means (3) to keep almost constant at a desired preset value the force intensity detected by the force detecting means (5),
- said device being **characterized in that** the tool (4) is interchangeable type chosen from a set of tools, each of which is provided with a circuitry means (12) connectable to an input of the control means (7) by means of a removable connector (13) and a respective wiring to provide data at least to identify the tool type or the data of the desired preset value of the device (1); and in an operational condition the control means (7), by means of the command means (6), activate the actuator means (3) to keep almost constant at a desired preset value the force intensity detected by the force detecting means (5). each pivot (8) is associated to a load cell of the force detecting means (5) connected to the control means (7) of electronic type; the control means (7) comprise an input connected to an operational detector of the tool (4); the operational detector of the tool (4) is associated to this latter and is connected to the control means (7) by means of a respective connection provided in the circuitry means (12) and in the removable connector (13).

2. Device according to claim 1 **characterized in that** the support means (2) consists of an articulated arm with at least two elements adjustable on vertical planes, one in respect to the other and/or in respect to the vehicle by means of the actuator means (3) consisting of a set of linear hydraulic actuators, interposed between the adjustable elements and between one of these two latter and the vehicle, at least one of which is fed by valve means driven by the command means (6) of electrical type.

3. Device according to claim 1 **characterized in that** it comprises a manual command (14) to enable and to deactivate the device (1).

4. Device according to claim 1 **characterized in that** it comprises visualization means (15) to control the operation and the status of the device (1).

5. Device according to claim 1 **characterized in that** the control means (7) are of electronic programmable digital type.

6. Device according to claim 1 **characterized in that** the inputs of the control means (7) for the force detecting means (5) are provided with respective low-pass filters.

7. Device according to claim 1 **characterized in that** the control means (7) comprise an input connected to measurement means of the speed of the vehicle.

## Patentansprüche

1. Steuervorrichtung, die zugehörig zu einem Unterstützungsmittel (2) ist, das mit einem Fahrzeug verbunden ist, und umfasst Betätigungsmittel für eine Bewegung von mindestens einem landwirtschaftlichen Werkzeug (4) oder ähnlichem mindestens in einer Höhe (3), während die Vorrichtung (1) mindestens umfasst:
Krafterfassungsmittel (5), die zwischen dem Unterstützungsmittel (2) und dem Werkzeug (4) angeordnet sind und die die Kraftintensität in mindestens einer vertikalen Richtung bereitstellen können, die zwischen dem Unterstützungsmittel (2) und dem Werkzeug (4) übertragen wird,
Befehlsmittel (6) des Betätigungsmittels (3),
Steuermittel (7), die mindestens am Eingang an die Krafterfassungsmittel (5) und am Ausgang an die Befehlsmittel (6) angeschlossen sind,
die Unterstützungsmittel (2) und das Werkzeug (4) sind gegenseitig verbunden mittels eines Satzes Drehzapfen (8),
die Unterstützungsmittel bestehen aus einem frei beweglichen Arm mit zwei Elementen, von denen das erste (10) schwenkbar mit einem Gelenk verbunden ist, das an dem Fahrzeug befestigt ist, während das erste Element (10) und das Gelenk durch den hydraulischen Betätiger (3) verbunden sind, der durch die Befehlsmittel (6) betätigt wird, und
in einem Betriebszustand der Steuermittel (7) werden die Betätigungsmittel (3) mittels den Befehlsmitteln (6) aktiviert, um die Kraftintensität, die durch die Krafterfassungsmittel (5) erfasst wurde, annähernd konstant bei einem gewünschten vorgegebenen Wert zu halten, die Vorrichtung ist **dadurch gekennzeichnet, dass** das Werkzeug (4) austauschbar ist und ausgewählt ist aus einem Satz von Werkzeugen, von denen jedes mit einem Schaltmittel (12) bereitgestellt ist, das mit einem Eingang der Steuermittel (7) mittels eines entfernbaren Verbinders (13) und einer entsprechenden Verdrahtung verbindbar ist, um Daten bereitzustellen, um mindestens die Werkzeugart oder die Daten des gewünschten vorgegebenen Werts der Vorrichtung (1) zu identifizieren, und
jeder Drehzapfen (8) ist zugehörig zu einer Lastzelle der Krafterfassungsmittel (5), die mit den Steuermitteln (7) elektronischer Art verbunden sind, während die Steuermittel (7) einen Eingang umfassen, der einen betriebsbereiten Detektor des Werkzeugs (4) umfasst, wobei der betriebsbereite Detektor des Werkzeugs (4) zugehörig zu dem Letzteren ist und mit den Steuermitteln (7) mittels einer entsprechenden Verbindung verbunden ist, die in den Schaltmitteln (12) sowie in dem entfernbaren Verbinder (13) bereitgestellt ist.

2. Vorrichtung gemäß Anspruch 1, **dadurch gekennzeichnet, dass** das Unterstützungsmittel (2) aus einem frei beweglichen Arm mit mindestens zwei Elementen besteht, die auf vertikalen Ebenen einstellbar sind, eine im Bezug auf die andere und/oder in Bezug auf das Fahrzeug mittels der Betätigungsmittel (3), die aus einem Satz an linearen hydraulischen Betätigern bestehen, die zwischen den einstellbaren Elementen und zwischen einem der zwei Letzteren und dem Fahrzeug angeordnet sind, während mindestens einer von diesen durch Ventilmittel beschickt wird, die durch die Befehlsmittel (6) elektrischer Art angetrieben sind.

3. Vorrichtung gemäß Anspruch 1, **dadurch gekennzeichnet, dass** sie einen manuellen Befehl (14) umfasst, um die Vorrichtung (1) einzuschalten und zu deaktivieren.

4. Vorrichtung gemäß Anspruch 1, **dadurch gekennzeichnet, dass** sie Visualisierungsmittel (14) umfasst, um den Betrieb und den Status der Vorrichtung (1) zu steuern.

5. Vorrichtung gemäß Anspruch 1, **dadurch gekennzeichnet, dass** die Steuermittel (7) elektronischer programmierbarer digitaler Art sind.

6. Vorrichtung gemäß Anspruch 1, **dadurch gekennzeichnet, dass** die Eingänge der Steuermittel (7) für die Krafterfassungsmittel (5) mit entsprechenden Tiefpassfiltern bereitgestellt sind.

7. Vorrichtung gemäß Anspruch 1, **dadurch gekennzeichnet, dass** die Steuermittel (7) einen Eingang umfassen, der mit Messmitteln für die Geschwindigkeit des Fahrzeugs verbunden ist.

## Revendications

1. Dispositif de commande associé à des moyens de support (2) raccordés à un véhicule et comprenant des moyens d'actionnement pour déplacer au moins à une hauteur (3) au moins un outil agricole (4) ou analogue; ledit dispositif (1) comprenant au moins :
- des moyens de détection de force (5) intercalés entre les moyens de support (2) et l'outil (4) et qui peuvent fournir l'intensité de force dans au moins une direction verticale, transmise entre lesdits moyens de support (2) et l'outil (4) ;
- des moyens de pilotage (6) des moyens d'actionnement (3) ;
- des moyens de commande (7) connectés au moins, à l'entrée, aux moyens de détection de force (5) et, à la sortie, aux moyens de pilotage (6) ;
- les moyens de support (2) et l'outil (4) étant raccordés mutuellement à l'aide d'un ensemble de pivots (8) ;
- les moyens de support étant constitués d'un bras articulé avec deux éléments, dont le premier (10) est raccordé à pivotement à une articulation fixée sur le véhicule, ledit premier élément (10) et l'articulation étant interconnectés par le dispositif d'actionnement hydraulique (3) actionné par les moyens de pilotage (6) ; et, en état de fonctionnement, les moyens de commande (7), à l'aide des moyens de pilotage (6), activant les moyens d'actionnement (3) pour maintenir à peu près constante à une valeur préréglée souhaitée l'intensité de force détectée par les moyens de détection de force (5) ;
- ledit dispositif étant **caractérisé en ce que** l'outil (4) est de type interchangeable, choisi parmi un ensemble d'outils dont chacun est muni de moyens à circuits (12) pouvant être connectés à une entrée des moyens de commande (7) à l'aide d'un connecteur amovible (13) et d'un câblage respectif pour fournir des données au moins pour identifier le type d'outil ou les données de la valeur préréglée souhaitée du dispositif (1) ; et, en état de fonctionnement, les moyens de commande (7), à l'aide des moyens de pilotage (6), activent les moyens d'actionnement (3) pour maintenir à peu près constante à une valeur préréglée souhaitée l'intensité de force détectée par les moyens de détection de force (5) ;
chaque pivot (8) est associé à une cellule de charge des moyens de détection de force (5) connectés aux moyens de commande (7) de type électronique ; les moyens de commande (7) comprennent une entrée connectée à un détecteur opérationnel de l'outil (4) ; le détecteur opérationnel de l'outil (4) est associé à ce dernier et est connecté aux moyens de commande (7) à l'aide d'une connexion respective aménagée dans les moyens à circuits (12) et dans le connecteur amovible (13).

2. Dispositif selon la revendication 1, **caractérisé en ce que** les moyens de support (2) sont constitués d'un bras articulé avec au moins deux éléments ajustables sur des plans verticaux, l'un par rapport à l'autre et/ou par rapport au véhicule à l'aide des moyens d'actionnement (3) constitués d'un ensemble d'actuateurs hydrauliques linéaires intercalés entre les éléments ajustables et entre un de ces deux derniers et le véhicule, dont au moins l'un est chargé par des moyens à soupape entraînés par les moyens de pilotage (6) de type électrique.

3. Dispositif selon la revendication 1, **caractérisé en ce qu'**il comprend une commande manuelle (14) pour activer et désactiver le dispositif (1).

4. Dispositif selon la revendication 1, **caractérisé en ce qu'**il comprend des moyens de visualisation (15) pour contrôler le fonctionnement et le statut du dispositif (1).

5. Dispositif selon la revendication 1, **caractérisé en ce que** les moyens de commande (7) sont de type numérique programmable électronique.

6. Dispositif selon la revendication 1, **caractérisé en ce que** les entrées des moyens de commande (7) pour les moyens de détection de force (5) sont munies de filtres passe-bas respectifs.

7. Dispositif selon la revendication 1, **caractérisé en ce que** les moyens de commande (7) comprennent une entrée connectée à des moyens de mesure de la vitesse du véhicule.
